**Europäisches Patentamt**

**European Patent Office**

**Office européen des brevets**

(19)

(11) Veröffentlichungsnummer: **0 043 076 B1**

(12) **EUROPÄISCHE PATENTSCHRIFT**

(45) Veröffentlichungstag der Patentschrift:
25.01.84

(51) Int. Cl.³: **F 16 K 11/087**

(21) Anmeldenummer: **81104830.5**

(22) Anmeldetag: **23.06.81**

(54) **Mischventil für Flüssigkeiten.**

(30) Priorität: **28.06.80 DE 3024518**

(43) Veröffentlichungstag der Anmeldung:
**06.01.82 Patentblatt 82/1**

(45) Bekanntmachung des Hinweises auf die Patenterteilung:
**25.01.84 Patentblatt 84/4**

(84) Benannte Vertragsstaaten:
**AT BE CH DE FR IT LI NL SE**

(56) Entgegenhaltungen:
**AT - B - 162 697**
**DD - A - 116 910**
**DE - A - 2 216 040**
**DE - B - 2 521 911**
**GB - A - 996 454**
**GB - A - 1 198 742**
**US - A - 2 845 949**
**US - A - 3 422 849**
**US - A - 3 472 279**

(73) Patentinhaber: **Hans Grohe GmbH & Co. KG,
Auestrasse 9, D-7622 Schiltach (DE)**

(72) Erfinder: **Lorch, Werner, Am Hammergraben 84/1,
D-7230 Schramberg (DE)**

(74) Vertreter: **Patentanwälte Ruff und Beier,
Neckarstrasse 50, D-7000 Stuttgart 1 (DE)**

## Mischventil für Flüssigkeiten

Die Erfindung betrifft ein Mischventil für Flüssigkeiten, insbesondere für sanitäre Zwecke, mit einem Kugelküken, das miteinander kommunizierende Ein- und Auslässe aufweist, einem Ventilgehäuse, das für das Kugelküken eine diesem angepasste Ventilsitzfläche aufweist, in der Einlasskanäle für die zu mischenden Flüssigkeiten und ein Auslasskanal münden, und einem mit dem Kugelküken verbundenen Betätigungsglied, das mit dem Kugelküken zur Veränderung der Menge der ausströmenden Flüssigkeit verschwenkbar und zur Veränderung des Mischungsverhältnisses der zuströmenden Flüssigkeiten bewegbar ist.

Derartige Mischventile sind beispielsweise aus den folgenden Druckschriften US-A Nrn. 3422849, US-A 3472279 und DD-A Nr. 116910 bekannt und beliebt, weil sie einhändig bedienbar sind und weil sie durch ein einfaches Schwenken ihres Betätigungsgliedes bzw. des damit starr verbundenen Griffes nach unten geschlossen und durch ein einfaches Schwenken des Betätigungsgliedes bzw. des damit starr verbundenen Griffes nach oben geöffnet werden können.

Ein Nachteil der Mischventile der eingangs beschriebenen Art ist jedoch darin zu sehen, dass es sich beim Verschwenken ihrer Betätigungsglieder aufgrund der geometrischen Anordnung der Kugelkükeneinlässe und -auslässe nicht erreichen lässt, dass das Mischungsverhältnis der zuströmenden Flüssigkeiten und damit beispielsweise die Temperatur der ausströmenden Mischflüssigkeit konstant bleibt. Ein weiterer Nachteil der Mischventile der eingangs beschriebenen Art ist darin zu sehen, dass sich die Lage der Achse, um die sich das Betätigungsglied mit dem Kugelküken verschwenken lässt, in Abhängigkeit von dem jeweils eingestellten Mischungsverhältnis ändert, was sich insbesondere in den Fällen als Nachteil erweist, in denen das Kugelküken-Betätigungsglied keinen einfachen, mehr oder weniger kugelförmigen Griff, sondern vielmehr einen in der Schwenkrichtung des Betätigungsgliedes einseitig abragenden Bügelgriff trägt, der in einer parallel zur Schwenkachse des Betätigungsgliedes verlaufenden Ebene verläuft, so dass sich seine Lage ebenfalls in Abhängigkeit vom jeweils eingestellten Mischungsverhältnis verändert, was seine Handhabung negativ beeinflusst.

Der Erfindung liegt die Aufgabe zugrunde, hier Abhilfe zu schaffen, und ein Mischventil der eingangs beschriebenen Art zu schaffen, das eine gute Konstanz des Mischungsverhältnisses während des Öffnungs- und Absperrvorganges ermöglicht und bei dem darüberhinaus Schrägstellungen der Schwenkachse des Betätigungsgliedes in verschiedenen Ebenen vermieden werden, so dass das Betätigungsglied des Kugelkükens gewünschtenfalls auch mit einem seine Betätigung wesentlich erleichternden, in der Schwenkrichtung des Betätigungsgliedes einseitig abragenden Bügelgriff versehen werden kann, ohne dass hierdurch die vorerwähnten Nachteile in Kauf genommen zu werden brauchen.

Diese Aufgabe wird erfindungsgemäss durch ein Mischventil der eingangs beschriebenen Art gelöst, bei dem das Betätigungsglied um nur eine durch die Kugelkükenmitte verlaufende Schwenkachse verschwenkbar und/oder um eine durch die Kugelkükenmitte senkrecht zur Schwenkachse verlaufende Drehachse drehbar ist und hierzu verdrehsicher in einem, parallele Führungen aufweisenden Schlitz einer mit dem Betätigungsglied relativ zum Ventilgehäuse in ihrer Ebene drehbaren Führungsplatte geführt ist, die parallel zur Schwenkachse des Betätigungsgliedes angeordnet ist. Die Drehachse des Kugelkükens fällt dabei vorzugsweise mit der Drehachse der Führungsplatte zusammen. Das Kugelküken besitzt nur eine Schwenkachse, die mit dem Küken in einer senkrecht zur Drehachse verlaufenden Ebene drehbar ist.

Beim erfindungsgemässen Mischventil ist also dafür gesorgt, dass die Achse, um die das Betätigungsglied zur Veränderung der Menge der ausströmenden Flüssigkeit zu verschwenken ist, unabhängig davon, welches Mischungsverhältnis zuvor durch Drehung des Kugelkükens mittels des Betätigungsgliedes eingestellt wurde, stets in einer zur Führungsplatte parallelen Ebene und nicht — wie bei den bisher bekannten Mischventilen der eingangs beschriebenen Art — in der Mantelfläche eines Kegels liegt. Wird das erfindungsgemässe Mischventil beispielsweise am Rand eines Waschbeckens so montiert, dass die der kulissenartigen Führung des Betätigungsgliedes dienende Führungsplatte horizontal verläuft, so hat dies zur Folge, dass die Ebene, in der das Betätigungsglied zur Veränderung der Menge der ausströmenden Flüssigkeit zu verschwenken ist, unabhängig davon welches Mischungsverhältnis zuvor mit Hilfe des Betätigungsgliedes eingestellt wurde, stets vertikal verläuft, was das Öffnen und Schliessen des erfindungsgemässen Mischventiles wesentlich vereinfacht und eine gute Konstanz des Mischungsverhältnisses während des Öffnungs- und Absperrvorganges sicherstellt. Entsprechendes gilt auch dann, wenn das erfindungsgemässe Mischventil beispielsweise an einer Badezimmerwand oberhalb eines Badewannenrandes so montiert wird, dass die Führungsplatte vertikal verläuft. Die Ebene, in der das Betätigungsglied zur Veränderung der Menge der ausströmenden Flüssigkeit zu verschwenken ist, verläuft dann, unabhängig davon, welches Mischungsverhältnis zuvor mit Hilfe des Betätigungsgliedes eingestellt wurde, stets senkrecht zu der Wand, an der das Mischventil montiert wurde, so dass das Betätigungsglied zum Schliessen des Ventiles jeweils nur in einer senkrecht zur Befestigungswand verlaufenden Ebene verschwenkt zu werden braucht.

Beim erfindungsgemässen Mischventil verlaufen die Ebenen, in denen das Betätigungsglied je nach eingestelltem Mischungsverhältnis zu verschwenken ist, sternförmig durch den Mittelpunkt des Kugelkükens und senkrecht zu der Ebene der Führungsplatte. Bei den bisher bekannten Mischventilen der eingangs beschriebenen Art verlaufen diese Ebenen zwar auch durch den Mittelpunkt des Kugelkükens, nicht aber senkrecht zu einer gemeinsamen Ebene, sondern vielmehr jeweils senkrecht zu der Mantelfläche des Kegels, in der die jeweils zugehörige Schwenkachse verläuft.

Die Verdrehbarkeit der Führungsplatte des erfindungsgemässen Mischventiles ist vorzugsweise begrenzt, und zwar vorzugsweise so, dass die Führungsplatte aus einer Mittelstellung nach beiden Seiten hin jeweils um 30 bis 60, vorzugsweise 45°, verdrehbar ist.

In einer bevorzugten Ausführungsform des erfindungsgemässen Mischventiles trägt dessen Betätigungsglied einen in der Schwenkrichtung des Betätigungsgliedes einseitig abragenden Bügelgriff.

In der Dreh- bzw. Mischmittelstellung des Kugelkükens sind bei einem besonderen Mischventil die Einlässe des Kugelkükens und vorzugsweise auch die Mündungen der Einlasskanäle in der Ventilsitzfläche des Ventilgehäuses vorzugsweise in einer zur Schwenkebene des Betätigungsgliedes parallelen Ebene hintereinander angeordnet. Damit unterscheidet sich das erfindungsgemässe Mischventil sehr wesentlich sowohl im Aufbau als auch in der Funktionsweise von den bisher bekannten Mischventilen der eingangs beschriebenen Art, bei denen die Einlässe des Kugelkükens und die Mündungen der Einlasskanäle in der Ventilsitzfläche des Kugelkükens stets nebeneinander in Ebenen angeordnet sind, die in der Drehmittelstellung des Kugelkükens senkrecht zur Schwenkebene des Betätigungsgliedes verlaufen. Die Mündungen in der Ventilsitzfläche des Kugelkükens und die ihnen zugeordneten Einlässe des Kugelkükens werden beim erfindungsgemässen Mischventil in der Mischmittelstellung während des Schwenkvorganges nicht — wie bei den bisher bekannten Mischventilen der eingangs beschriebenen Art — parallel nebeneinander, sondern vielmehr fluchtend hintereinander mehr oder weniger vollständig zur Deckung gebracht, worauf in der nachfolgenden Beschreibung gesondert hingewiesen wird.

Die vorerwähnte Führungsplatte des erfindungsgemässen Mischventiles ist in Draufsicht vorzugsweise im wesentlichen kreisförmig ausgebildet und in einem eine zentrale Ausnehmung aufweisenden Lagerkörper gelagert, der einen mit zwei Anschlägen der Führungsplatte zusammenwirkenden, die Verdrehbarkeit der Führungsplatte begrenzenden Anschlag aufweisen kann. Bei einer bevorzugten Ausführungsform ist dieser Lagerkörper im wesentlichen ringförmig ausgebildet und bildet den oberen Teil des Ventilgehäuses, zu dessen Befestigung eine mit dem unteren Teil des Ventilgehäuses verschraubbare Überwurfmutter vorgesehen sein kann.

Der Lagerkörper kann kugelkükenseitig eine mit der Oberfläche des Kugelkükens zusammenwirkende Dichtung aufweisen. Zur Montageerleichterung kann zwischen dem Lagerkörper und dem unteren Teil des Ventilgehäuses eine Verdrehsicherung vorgesehen sein. Bei einer bevorzugten Ausführungsform des erfindungsgemässen Mischventiles ist der Lagerkörper in dem oberen Bereich des unteren Teiles des Ventilgehäuses einsetzbar und weist eine seitliche Nase auf, für die im oberen Bereich des unteren Teiles des Ventilgehäuses eine axial verlaufende Nut vorgesehen ist. Der Rand der Führungsplatte ist auf der dem Kugelküken abgewandten Seite vorzugsweise von einem in dem Führungskörper gelagerten Gleitring bedeckt.

Der Auslass des Kugelkükens des erfindungsgemässen Mischventils ist in bezug auf die Schwenkachse des Betätigungsgliedes vorzugsweise zwischen den Einlässen des Kugelkükens jedoch seitlich versetzt angeordnet. Die Einlässe des Kugelkükens können aus mehreren, jeweils Einlassbereiche bildende Einlassöffnungen bestehen, wobei die Einlassöffnungen in Kugelküken-Längengrad-Richtung kleiner, vorzugsweise etwa halb so gross, sein können als in Breitengradrichtung.

Bei einer bevorzugten Ausführungsform sind die Mündungen der Einlasskanäle in der Ventilsitzfläche des Ventilgehäuses spiegelbildlich zu einer in der Drehmittelstellung des Kugelkükens senkrecht zur Schwenkebene des Betätigungsgliedes verlaufenden Ebene angeordnet, wobei die Einlässe bzw. die sie bildenden Einlassbereiche des Kugelkükens und die Mündungen der Einlasskanäle mit Vorteil von Kugelküken-Schnittebenen geschnitten werden, die in der Drehmittelstellung des Kugelkükens parallel zur Schwenkebene des Betätigungsgliedes verlaufen, wobei die einzelnen Ebenen sowohl die Kaltwasser- als auch die Warmwassermündungen bzw. Öffnungen schneiden.

Der Auslass des Kugelkükens des erfindungsgemässen Mischventiles ist vorzugsweise auf der vom Betätigungsglied abgewandten Seite des Kugelkükenäquators angeordnet und liegt dabei auf einem Kugelkükenlängengrad, der mit der Schwenkebene des Betätigungsgliedes einen Winkel von 75 bis 105, vorzugsweise ca. 90°, einschliesst, wobei der Kugelkükenäquator in der zur Betätigungsstange senkrechten Ebene liegt. Die Ebene, in der einerseits die Längsachse und andererseits die Schwenkachse des Betätigungsgliedes liegen unterteilt bei einer bevorzugten Ausführungsform die Verbindungslinien einander entsprechenden Kalt- und Warmwasser-Einlassöffnungen des Kugelkükens in ungleiche Abschnitte, wobei einander entsprechende Einlassöffnungen zueinander vorzugsweise im wesentlichen spiegelbildlich ausgebildet und angeordnet sind und die Spiegelebene mit der Ebene, auf der einerseits die Längsachse und andererseits die Schwenkachse des Betätigungsgliedes liegen, einen Winkel von ca. 15 bis 25, vorzugsweise 20°, einschliesst.

Um zu erreichen, dass bei spiegelbildlich an der der Führungsplatte gegenüberliegenden Seite der Ventilsitzfläche in diese mündenden Einlasskanälen die eine Schwenkstellung des Betätigungsgliedes die Schliessstellung und die andere die Offenstellung ist, liegt vorzugsweise ein Einlass des Kugelkükens näher an der durch die Schwenkachse und die Längsachse des Betätigungsgliedes verlaufende Ebene als der andere Einlass.

Die Einlässe des Kugelkükens können Einlassbereiche mit mindestens zwei Öffnungen sein und die Einlassbereiche sind vorzugsweise jeweils von kleinen und mindestens einer grossen Öffnung gebildet, wobei die grösseren Öffnungen näher am Auslass liegen als die kleineren Öffnungen. Es können jeweils mehrere kleinere längliche Öffnungen vorgesehen sein, die vorzugsweise parallel nebeneinander angeordnet sind. Die Einlässe des Kugelkükens sind vorzugsweise im Bereich einer Kreisbahn angeordnet bzw. die Mitten der Einlassbereiche liegen im wesentlichen auf einer Kreisbahn, deren Ebene zur Schwenkachse parallel ist und zu der durch die Längsachse des Betätigungsgliedes und durch die Schwenkachse gebildeten Ebene geneigt ist, insbesondere mit dieser Ebene einen Winkel von 65 bis 75, vorzugsweise ca. 70°, einschliesst. Die Breite der Öffnungen auf der Kugeloberfläche senkrecht zur Kreisbahn entspricht vorzugsweise etwa dem Innendurchmesser der Einlasskanalmündungen. Die grösseren Öffnungen des Kugelkükens sind, bezogen auf die Schwenkebene des Betätigungsgliedes, auf der Seite des Auslasses und die kleineren Öffnungen auf der gegenüberliegenden Seite angeordnet, wobei die grossen und die kleinen Öffnungen jeweils im wesentlichen an die Schwenkebene des Betätigungsgliedes angrenzen können.

Die Einlässe bzw. die gedachten Mittelpunkte der Einlassbereiche des Kugelkükens liegen vorzugsweise auf Kugelküken-Radiallinien, die untereinander einen Winkel von 60 bis 100, vorzugsweise 80°, einschliessen. Bei einer bevorzugten Ausführungsform schliesst die Radiallinie des weiter von der Längsachse liegenden Einlasses des Kugelkükens mit dem vom Betätigungsglied abgewandten Teil der Längsachse des Betätigungsgliedes einen Winkel im Bereich von 50 bis 70° ein. Die Radiallinie des näher an der Längsachse liegenden Einlasses des Kugelkükens schliesst mit dem vom Betätigungsglied abgewandten Teil der Längsachse des Betätigungsgliedes einen Winkel ein, der vorzugsweise 20 bis 30° beträgt. Die Radiallinie des Auslasses des Kugelkükens schliesst mit dem vom Betätigungsglied abgewandten Teil der Längsachse des Betätigungsgliedes dagegen einen Winkel ein, der im Bereich von 40 bis 60, vorzugsweise 50°, liegt.

Ist das erfindungsgemässe Mischventil geschlossen, so liegt unabhängig von der Mischstellung vorzugsweise ein Einlassbereich des Kugelkükens zwischen den Mündungen der Einlasskanäle in der Ventilsitzfläche des Kugelkükens, während der andere Einlassbereich ausserhalb der Einlasskanalmündung liegt.

Die Führungsstege zwischen den Einlasskanalmündungen und der grossflächig gestalteten Auslasskanalmündung in der Ventilsitzfläche sind vorzugsweise schmäler als der wirksame Durchmesser der Einlassöffnungen, insbesondere schmäler als der lichte Durchmesser der grossen Einlassöffnungen, wobei die Mündungsränder der Einlasskanäle gegen das Kugelküken mittels Gummidichtungen abgedichtet sein können und die einzelnen Öffnungen der Einlassbereiche durch in der Kugelfläche liegende Stege unterteilt sein können.

Zur Montage in einer Stellung, bei der die Einlasskanäle im wesentlichen von unten und vom Benutzer aus betrachtet hintereinander in die Ventilsitzfläche münden, liegt beim erfindungsgemässen Mischventil vorzugsweise der in bezug auf den Benutzer vordere Einlass des Kugelkükens näher an der durch die Schwenkachse und die Längsachse des Betätigungsgliedes verlaufende Ebene als der hintere Einlass des Kugelkükens.

Einlässe eines Einlassbereiches des Kugelkükens liegen in Ventilschliessstellung vorzugsweise innerhalb eines Kreises, dessen Mittelpunkt in Ventilschliessstellung auf der Drehachse liegt, und dessen Radius kleiner ist als der kleinste Abstand zum nächstliegenden Mündungsrand in der Ventilsitzfläche.

Die anderen Einlässe des Kugelkükens liegen in der Ventilschliessstellung dabei vorzugsweise ausserhalb eines Kreises, der in der Ventilschliessstellung um die Drehachse verläuft, in einer senkrecht zur Drehachse verlaufenden Ebene liegt und mindestens die zugehörige, vorzugsweise beide Mündungen der Einlasskanäle in der Ventilsitzfläche einschliesst.

Zur Erläuterung der beim Kugelküken bzw. beim Ventilgehäuse des erfindungsgemässen Mischventils herrschenden Achsenverhältnissen wird noch auf folgendes hingewiesen:

Die Lage des Kugelkükens des erfindungsgemässen Mischventiles lässt sich durch Verstellung des mit dem Kugelküken starr verbundenen Betätigungsgliedes verändern.

Das Kugelküken kann so um eine durch sein Zentrum gehende Achse (Schwenkachse) verschwenkt und um eine dazu stets senkrecht und ebenfalls durch das Kugelkükenzentrum verlaufende Achse (Drehachse) verdreht werden.

Die Drehachse des Kugelkükens behält — vom Ventilgehäuse aus betrachtet — ihre Lage stets bei, während die Lage der jeweiligen Schwenkachse des Kugelkükens — ebenfalls vom Ventilgehäuse aus betrachtet — vom jeweiligen Drehwinkel des Kugelkükens bzw. der Führungsplatte abhängt. Vom Ventilgehäuse aus betrachtet liegt die Schwenkachse bzw. liegen die Achsen, um die eine Schwenkung des Kugelkükens möglich ist, in einer zur Drehachse des Kugelkükens senkrechten Ebene, wobei sie mit der Längsachse des Betätigungsgliedes jeweils einen rechten Winkel einschliessen.

Vom Kugelküken aus betrachtet sind die beiden Achsen, um die das Kugelküken durch Verstellung des Betätigungsgliedes jeweils verdreht bzw. verschwenkt werden kann, anders zu definieren — die Schwenkachse als eine in der Lage unveränderbare, zur Längsachse des Betätigungsgliedes senkrecht verlaufende Achse und die Drehachse als eine Achse, deren Lage vom jeweiligen Schwenkwinkel abhängig ist, und die in einer in der Schwenkebene des Betätigungsgliedes liegende Ebene liegt. Die Drehachse des Kugelkükens ist in bezug auf das Ventilgehäuse ortsfest; sie verläuft senkrecht zur Führungsplatte durch deren Mittelpunkt.

Weitere Einzelheiten, Merkmale und Vorteile der Erfindung ergeben sich aus den Unteransprüchen und der folgenden Beschreibung einer bevorzugten Ausführungsform des erfindungsgemässen Mischventiles im Zusammenhang mit der Zeichnung. In der Zeichnung zeigen jeweils schematisch:

Fig. 1 eine teilweise geschnittene Seitenansicht eines erfindungsgemässen Mischventiles in seiner Schliessstellung, das für den Einbau in einem Waschbecken vorgesehen ist;

Fig. 2 eine Teilseitenansicht des Ventilgehäuses des in Fig. 1 dargestellten Mischventiles;

Fig. 3 eine Draufsicht auf das in Fig. 2 dargestellte Ventilgehäuse;

Fig. 4 eine Draufsicht auf die Führungsplatte und den ihr zugeordneten Lagerkörper des in Fig. 1 dargestellten Mischventiles;

Fig. 5 das Kugelküken des in Fig. 1 dargestellten Mischventiles in vergrössertem Massstab von unten in einer in bezug auf die Längsachse seines Betätigungsgliedes verschwenkten Lage, und

Fig. 6 die Anordnung der Kugelkükeneinlässe und in die diesem zugeordneten Einlasskanalmündungen beim erfindungsgemässen Mischventil im Vergleich zu bisher bekannten Mischventilen vom Kugelinneren aus gesehen.

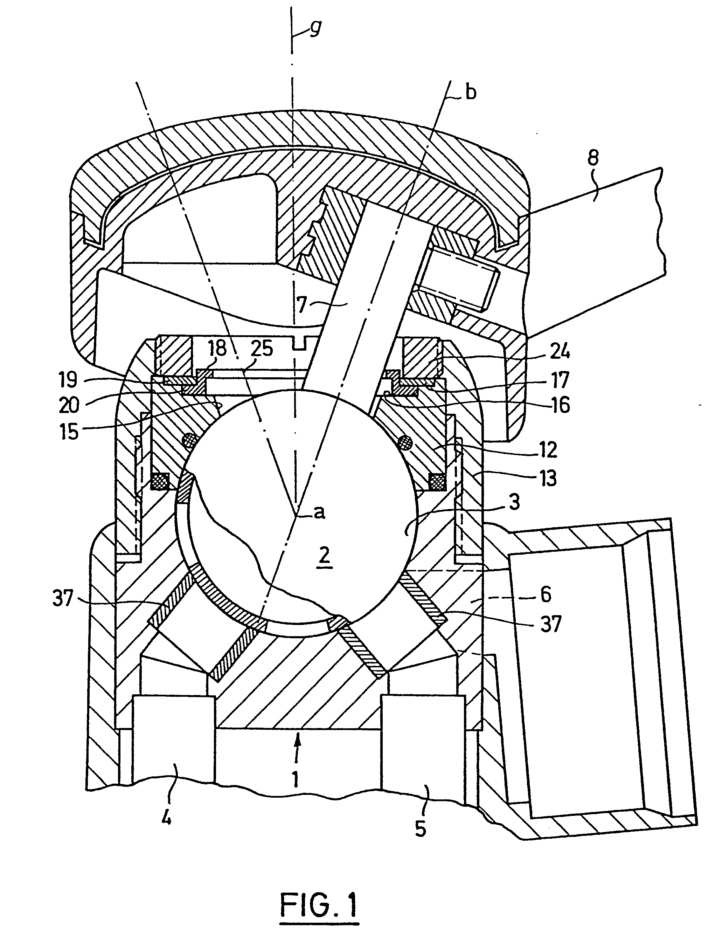

Das in Fig. 1 dargestellte Mischventil weist ein Ventilgehäuse 1 auf, das mit einer einem in ihm gelagerten Kugelküken 2 angepassten Ventilsitzfläche 3 versehen ist. In die Ventilsitzfläche 3 münden ein Einlasskanal 4 für kaltes Wasser, ein Einlasskanal 5 für warmes Wasser und ein Auslasskanal 6.

Das Kugelküken 2 weist als Betätigungsglied 7 einen mit ihm starr verbundenen Zapfen auf, an dessen vom Kugelküken 2 abgewandten Ende ein einseitig in der Schwenkrichtung des Betätigungsgliedes 7 abragender U-förmiger Bügelgriff 8 befestigt ist. Das Kugelküken 2 ist hohl ausgebildet und weist Einlässe 9, 9', 9'' für Kaltwasser und 10, 10', 10'' für Warmwasser sowie einen Auslass 11 auf, die durch Drehen und/oder Schwenken des Kugelkükens 2 mit den Mündungen der Einlasskanäle 4 bis 6 mehr oder weniger vollständig zur Deckung gebracht werden können, worauf später noch detailliert eingegangen werden wird.

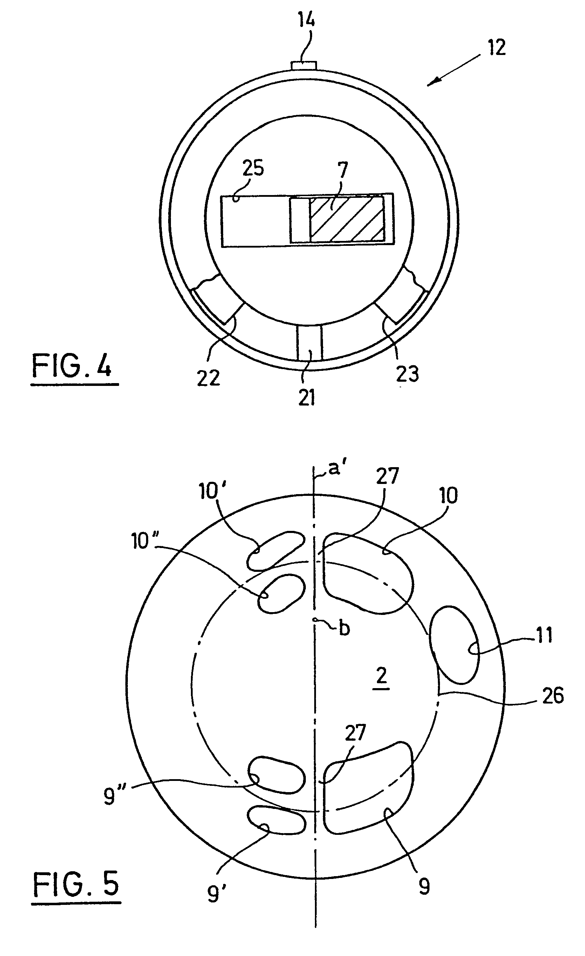

In den unteren Teil des Ventilgehäuses 1 ist von oben her ein im wesentlichen ringförmiger Lagerkörper 12 eingesetzt, zu dessen Befestigung eine mit dem unteren Teil des Ventilgehäuses 1 verschraubbare Überwurfmutter 13 vorgesehen ist. Der Lagerkörper 12 weist eine seitliche Nase 14 auf (vgl. Fig. 4), für die im oberen Bereich des unteren Teiles des Ventilgehäuses 1 eine axial verlaufende Nut 14' vorgesehen ist, so dass der Lagerkörper 12 in den unteren Teil des Ventilgehäuses 1 nur eingesetzt werden kann, nachdem er so ausgerichtet wurde, dass seine Nase 14 in die ihr im oberen Bereich des unteren Teiles des Ventilgehäuses 1 vorgesehene axiale Nut 14' eingeschoben werden kann. Die Nase 14 und die ihr im oberen Bereich des unteren Teiles des Ventilgehäuses 1 zugeordnete Nut sorgen dafür, dass der Lagerkörper 12 nur nach Nase-Nut-Ausrichtung von oben her in den unteren Teil des Ventilgehäuses 1 eingesetzt werden kann und verhindert, dass sich der Lagerkörper 12 nach dem Einsetzen verdrehen kann.

Der im wesentlichen ringförmige Lagerkörper 12 weist eine zentrale Ausnehmung 15 auf, durch die das Betätigungsglied 7 des Kugelkükens 2 ragt. Auf der dem Kugelküken 2 abgewandten Seite hat der Lagerkörper 12 zwei stufenförmig angeordnete Ringschultern 16, 17, die der Lagerung einer Führungsplatte 18 bzw. eines Gleitringes 19 dienen. Die im wesentlichen kreisförmige Führungsplatte 18 weist einen zentralen Bereich auf, dessen Aussendurchmesser im wesentlichen dem Innendurchmesser des Gleitringes 19 entspricht. An diesem zentralen Bereich der Führungsplatte 18 schliesst sich ein nach aussen ragender, unterhalb des Gleitringes 19 verlaufender Rand 20 an, der auf der unteren Schulter 16 des Lagerkörpers 12 gelagert ist und den zentralen Bereich der Führungsplatte 18 in einem Bogen von ca. 260° umgibt (vgl. Fig. 4). Auf der Schulter 16 ist eine Nase 21 befestigt, die einen Anschlag für die benachbarten Enden 22, 23 des Randes 20 der Führungsplatte 18 bilden, so dass diese aus einer Mittelstellung nach beiden Seiten um jeweils 45° verdrehbar ist.

Der Rand 20 der Führungsplatte 18 ist, wie bereits erwähnt, auf der dem Kugelküken 2 abgewandten Seite von einem auf der Schulter 17 gelagerten Gleitring 19 bedeckt. Die vom Kugelküken 2 abgewandte Seite des Gleitringes 19 stützt sich gegen einen Einstellring 24, der von oben her in die Überwurfmutter 13 geschraubt ist und das obere Widerlager für das Kugelküken bildet.

Im zentralen Bereich der Führungsplatte 18 ist ein im wesentlichen rechteckiger Schlitz 25 vorgesehen, dessen Breite im wesentlichen der Breite des im Querschnitt rechteckigen Betätitungsgliedes 7 des Kugelkükens 2 entspricht, so dass sich das Betätigungsglied relativ zur Führungsplatte nicht verdrehen kann. Die durch das Zusammenspiel der Randenden 22, 23 mit der Nase 21 beschränkte Verdrehbarkeit der Führungsplatte 18 und die Bemessung des im zentralen Bereich der Führungsplatte 18 vorgesehenen Schlitzes 25 haben zur Folge, dass das Kugelküken 2 nicht beliebig gedreht und/oder verschwenkt werden kann. Das Kugelküken 2 kann vielmehr aus einer Mittelstellung heraus nach rechts und nach links maximal um etwa 45° gedreht und/oder um nur eine Achse a verschwenkt werden, die senkrecht zu einer Ebene verläuft, deren Lage jeweils bestimmt ist durch den Mittelpunkt des Kugelkükens 2, die Längsachse b des Betätigungsgliedes 7 und die jeweilige Richtung des Schlitzes 25. Ist das Mischventil so montiert, dass die Längsachse seines Ventilgehäuses vertikal und die Führungsplatte 18 horizontal verläuft, so bedeutet dies, dass die einzige Achse a, um die das Kugelküken 2 jeweils verschwenkbar ist, jeweils horizontal verläuft, wodurch ein die Handhabung des Bügelgriffes 8 erschwerendes Verkanten des Bügelgriffes 8 vermieden ist. Der Bügelgriff 8 liegt vielmehr stets in einer Ebene, die parallel zu der einzig möglichen Schwenkachse a des Betätigungsgliedes und senkrecht zu dessen Schwenkebene verläuft.

Das Kugelküken 2 ist, wie bereits erwähnt, hohl ausgebildet. In der in Fig. 5 dargestellten Ausführungsform weist das Kugelküken 2 einen von einer grossen Öffnung 9 und zwei kleineren Öffnungen 9', 9'' gebildeten Kaltwasser-Einlassbereich, einen von einer grossen Öffnung 10 und zwei kleineren Öffnungen 10', 10'' gebildeten Warmwasser-Einlassbereich und einen Auslass 11 auf. Die kleineren Einlassöffnungen 9', 9'' bzw. 10', 10'' sind jeweils langlochartig ausgebildet und parallel nebeneinander angeordnet. Die beiden Einlassbereiche sind auf einem Kreis 26 angeordnet, dessen Ebene zur Schwenkachse parallel ist und zu der durch die Längsachse des Betätigungsgliedes und durch die Schwenkachse gebildeteten Ebene geneigt ist. Die jeweils grösseren Einlassöffnungen 9 bzw. 10 sind — bezogen auf die Schwenkebene a' des Betätigungsgliedes 7 auf der Seite des Auslasses 11 und die kleineren Einlassöffnungen 9', 9'' bzw. 10', 10'' — auf der gegenüberliegenden Seite angeordnet. Die Schwenkebene a' des Betätigungsgliedes 7 verläuft im wesentlichen in der Mitte des die grösseren Einlassöffnungen von den benachbarten kleineren Einlassöffnungen trennenden Steges 27. Die grösseren Einlassöffnungen 9, 10 sind im wesentlichen rautenförmig ausgebildet. Die den kleineren Einlassöffnungen 9', 9'', bzw. 10', 10'' abgewandte Kante der grösseren Einlassöffnung 9 ist an einer, die der grösseren Einlassöffnung 10 an zwei Rautenecken abgerundet. Der Auslass 11 weist einen kreisförmigen Öffnungsquerschnitt auf, der dem Mündungsquerschnitt eines der beiden Einlasskanäle 4, 5 im wesentlichen entspricht. Vorgenannte Einlaßkanäle 4, 5 sind vom Benutzer aus betrachtet hintereinander angeordnet und zwar in einer Ebene, die parallel zu der Ebene a' ist, in der das Kugelküken 2 in seiner Dreh-Mittelstellung verschwenkbar ist.

Das erfindungsgemässe Mischventil ist so aufgebaut und seine Einzelteile sind so bemessen und angeordnet, dass die Einlässe geschlossen sind, sobald der vom Betätigungsglied 7 getragene Bügelgriff 8 nach unten gedrückt ist (vgl. Fig. 1). Wird der Bügelgriff 8 angehoben, so kommt die eine und/oder andere Öffnung des Kugelkükens mehr oder weniger mit den Mündungen der Einlasskanäle 4, 5 in der Ventilsitzfläche des Kugelkükens 2 zur Deckung, mit der Folge, dass das Innere des Kugelkükens 2 jetzt eine Verbindung zwischen den — in Abhängigkeit von der Verdrehung des Kugelkükens — mehr oder weniger geöffneten Mündungen der Einlasskanäle 4, 5 und der Mündung des Auslasskanales 6 bildet.

Durch eine Verdrehung des Kugelkükens 2 um eine zu seiner Schwenkachse a senkrechten — nach Fig. 1 also in der Zeichnungsebene liegende und parallel zu den beiden Einlasskanälen verlaufende — Drehachse g lässt sich ohne Veränderung der Menge der ausströmenden Flüssigkeit die Temperatur der ausströmenden Flüssigkeit problemlos verändern. Der Bügelgriff 8 braucht hierzu nur entsprechend weit nach rechts bzw. nach links gedrückt zu werden. Selbstverständlich kann in einem Arbeitsgang gleichzeitig sowohl die Temperatur als auch die Menge der ausströmenden Flüssigkeit verändert werden. Der Bügelgriff 8 braucht hierzu nur entsprechend gehoben bzw. gesenkt und nach rechts bzw. nach links gedrückt zu werden.

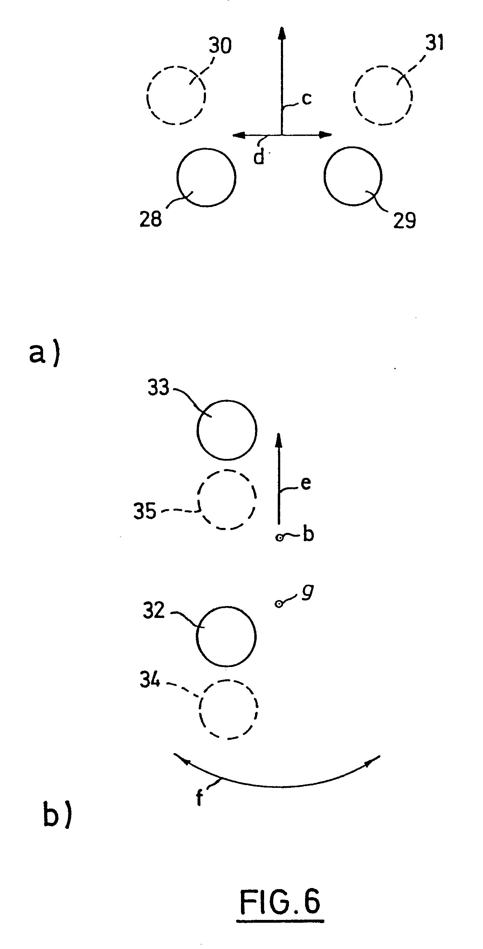

In Fig. 6 a sind in der geschlossenen Drehmittelstellung des zugehörigen Betätigungsgliedes jeweils schematisch dargestellt vom Inneren des Kugelkükens aus gesehen der Warmwassereinlass 28 eines Kugelkükens nach dem Stande der Technik und der Kaltwassereinlass 29 dieses Kugelkükens sowie die Mündungen 30 und 31 der im Ventilsitz des Kugelkükens mündenden Warmwasser- bzw. Kaltwasserkanäle. Die Schwenkrichtung des zugehörigen Betätigungsgliedes ist mit Pfeil c und die Drehrichtung des Kugelkükenäquators mit Pfeil d angedeutet.

In Fig. 6 b sind — ebenfalls in der geschlossenen Drehmittelstellung des zugehörigen Betätigungsgliedes — jeweils schematisch dargestellt vom Inneren des Kugelkükens aus gesehen der Warmwassereinlass 32 eines Kugelkükens gemäss Erfindung und der Kaltwassereinlass 33 sowie die Mündungen 34 und 35 der in die Ventilsitzfläche des Kugelkükens mündenden Warmwasser- und Kaltwasserkanäle.

Die Schwenkrichtung des zugehörigen Betätigungsgliedes ist mit Pfeil e und die Drehrichtung des Kugelkükens um die Achse g mit Pfeil f angedeutet.

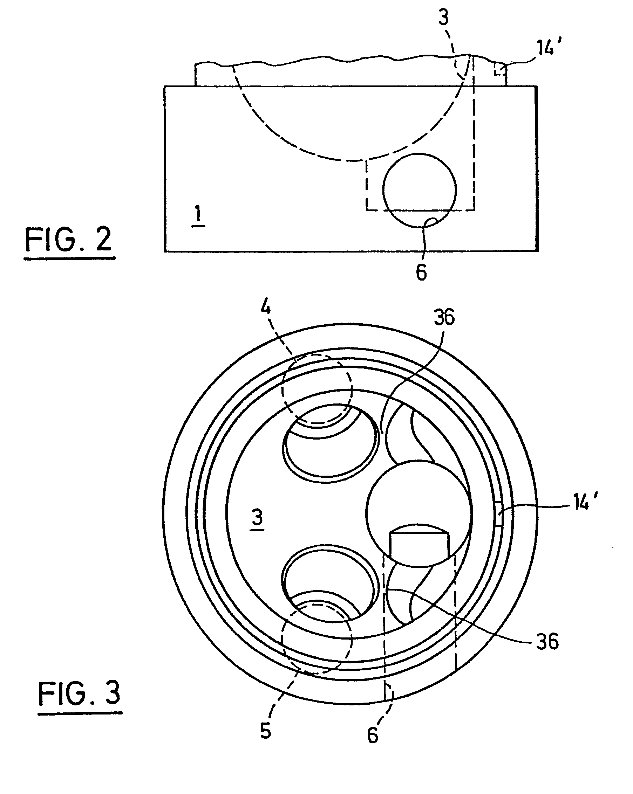

Führungsstege 36 zwischen den Einlasskanalmündungen und der grossflächig gestalteten Mündung des Auslasskanales 6 in der Ventilsitzfläche 3 sind (vgl. Fig. 3) wesentlich schmäler als der wirksame Durchmesser der Einlassöffnungen des Kugelkükens, insbesondere als der lichte Durchmesser der Einlassöffnungen 9, 10, so dass Einlassöffnungen gleichzeitig als Auslass dienen können. Bei entsprechender Ausbildung der Einlässe kann auf einen gesonderten Auslass verzichtet werden.

Die Mündungsränder der Einlasskanäle 4, 5 sind gegen das Kugelküken 2 mittels Gummidichtungen 37 abgedichtet (vgl. Fig. 1), die in Fig. 3 der besseren Übersicht wegen nicht dargestellt sind.

## Patentansprüche

1. Mischventil für Flüssigkeiten, insbesondere für sanitäre Zwecke, mit einem Kugelküken (2), das miteinander kommunizierende Ein- und Auslässe (9, 10, 11) aufweist, einem Ventilgehäuse (1), das für das Kugelküken (2) eine diesem angepasste Ventilsitzfläche (3) aufweist, in der Einlasskanäle (4, 5) für die zu mischenden Flüssigkeiten und ein Auslasskanal (6) münden, und einem mit dem Kugelküken (2) verbundenen Betätigungsglied (7), das mit dem Kugelküken (2) zur Veränderung der Menge der ausströmenden Flüssigkeit verschwenkbar und zur Veränderung des Mischungsverhältnisses der zuströmenden Flüssigkeiten bewegbar ist, dadurch gekennzeichnet, dass das Betätigungsgleid (7) um nur eine durch die Kugelkükenmitte verlaufende Schwenkachse (a) verschwenkbar und/oder um eine durch die Kugelkükenmitte senkrecht zur Schwenkachse (a) verlaufende Drehachse (g) drehbar ist und hierzu verdrehsicher in einem parallele Führungen aufweisenden Schlitz (25) einer mit dem Betätigungsglied (7) relativ zum Ventilgehäuse (1) in ihrer Ebene drehbaren Führungsplatte (18) geführt ist, die parallel zur Schwenkachse (a) des Betätigungsgliedes (7) angeordnet ist.

2. Mischventil nach Anspruch 1, dadurch gekennzeichnet, dass die Verdrehbarkeit der Führungsplatte (18) begrenzt ist, vorzugsweise die Führungsplatte (18) in Draufsicht im wesentlichen kreisförmig ausgebildet und in einem eine zentrale Ausnehmung (15) aufweisenden Lagerkörper (12) gelagert ist, der einen mit zwei Anschlägen (22, 23) der Führungsplatte (18) zusammenwirkenden, die Verdrehbarkeit der Führungsplatte (18) begrenzenden Anschlag (21) aufweist.

3. Mischventil, insbesondere nach einem der vorhergehenden Ansprüche, dadurch gekennzeichnet, dass die Einlässe (9, 9', 9'', 10, 10', 10'') des Kugelkükens (2) und vorzugsweise auch die Mündungen der Einlasskanäle (4, 5) in der Drehmittelstellung des Betätigungsgliedes (7) in einer zur Schwenkebene des Betätigungsgliedes (7) parallelen Ebene hintereinander angeordnet sind.

4. Mischventil nach einem der vorhergehenden Ansprüche, dadurch gekennzeichnet, dass der Auslass (11) des Kugelkükens (2) in bezug auf die Schwenkebene des Betätigungsgliedes (7) zwischen den Einlässen (9, 9', 9'', 10, 10', 10'') des Kugelkükens (2) jedoch seitlich versetzt angeordnet ist.

5. Mischventil nach einem der vorhergehenden Ansprüche, dadurch gekennzeichnet, dass die Einlässe des Kugelkükens (2) von mehreren, jeweils Einlassbereiche bildenden Einlassöffnungen (9, 9', 9'', 10, 10', 10'') gebildet sind.

6. Mischventil nach Anspruch 5, dadurch gekennzeichnet, dass die Einlassöffnungen in Längengradrichtung kleiner vorzugsweise etwa halb so gross sind als in Breitengradrichtung.

7. Mischventil nach einem der vorhergehenden Ansprüche, dadurch gekennzeichnet, dass die Mündungen der Einlasskanäle (4, 5) in der Ventilsitzfläche des Ventilgehäuses (1) spiegelbildlich zu einer in der Drehmittelstellung des Kugelkükens (2) senkrecht zur Schwenkebene des Betätigungsgliedes (7) verlaufenden Ebene angeordnet sind.

8. Mischventil nach einem der vorhergehenden Ansprüche, dadurch gekennzeichnet, dass der Auslass (11) des Kugelkükens (2) in der Drehmittelstellung des Kugelkükens (2) auf der vom Betätigungsglied (7) abgewandten Seite des Kugelkükenäquators angeordnet ist und auf einem Längengrad liegt, der mit der Schwenkebene des Betätigungsgliedes (7) einen Winkel von 75-105, vorzugsweise ca. 90°, einschliesst.

9. Mischventil nach einem der Ansprüche 5 bis 8, dadurch gekennzeichnet, dass die Ebene, in der die Längsachse (b) des Betätigungsgliedes (7) und die Schwenkachse (a) liegen, die Verbindungslinien einander entsprechender Kalt- und Warmwassereinlassöffnungen des Kugelkükens (2) in ungleiche Abschnitte unterteilt.

10. Mischventil nach Anspruch 9, dadurch gekennzeichnet, dass die einander entsprechenden Einlassöffnungen zueinander im wesentlichen spiegelbildlich ausgebildet und angeordnet sind und die Spiegelebene mit der Ebene, auf der die Längsachse (b) des Betätigungsgliedes (7) und die Schwenkachse (a) liegen, einen Winkel von ca. 20° einschliesst.

11. Mischventil nach einem der vorhergehenden Ansprüche zur Montage in einer Stellung, bei der die Einlasskanäle im wesentlichen von unten und vom Benutzer aus betrachtet hintereinander in die Ventilsitzfläche münden, dadurch gekennzeichnet, dass der in bezug auf den Benutzer vordere Einlass (10, 10', 10'') des Kugelkükens (2) näher an der durch die Schwenkachse (a) und die Längsachse (b) des Betätigungsgliedes (7) verlaufende Ebene liegt als der hintere Einlass (9, 9', 9'') des Kugelkükens (2).

12. Mischventil nach einem der Ansprüche 5 bis 10, dadurch gekennzeichnet, dass die Einlässe des Kugelkükens (2) als mindestens zwei Öffnungen aufweisende Einlassbereiche (9, 9', 9'', 10, 10', 10'') ausgebildet sind, die vorzugsweise jeweils von kleinen und mindestens einer grossen Öffnung gebildet sind, wobei die grösseren Öffnungen (9, 10) näher am Auslass (11) liegen als die kleineren Öffnungen (9', 9'', 10', 10'').

13. Mischventil nach Anspruch 11, dadurch gekennzeichnet, dass mindestens zwei kleinere längliche Öffnungen (9', 9'', 10', 10'') vorgesehen sind, die vorzugsweise parallel nebeneinander angeordnet sind.

14. Mischventil nach einem der vorhergehenden Ansprüche, dadurch gekennzeichnet, dass die Einlässe (9, 9', 9'', 10, 10', 10'') des Kugelkükens (2) im Bereich einer Kreisbahn (26) angeordnet sind, deren Ebene zur Schwenkachse parallel ist und zu der durch die Längsachse des Betätigungsgliedes und durch die Schwenkachse gebildeten Ebene vorzugsweise geneigt ist, insbesondere mit dieser Ebene einen Winkel von 65 bis 75, vorzugsweise ca. 70°, einschliesst, und dass die Breite der Öffnungen auf der Kugeloberfläche senkrecht zur Kreisbahn vorzugsweise im wesentlichen dem Durchmesser der Mündungen der Einlasskanäle entspricht.

15. Mischventil nach einem der Ansprüche 12 bis 14, dadurch gekennzeichnet, dass die grösseren Öffnungen (9, 10), bezogen auf die Schwenkebene des Betätigungsgliedes (7), auf der Seite des Auslasses (11) und die kleineren Öffnungen (9', 9'', 10', 10'') auf der gegenüberliegenden Seite angeordnet sind, wobei vorzugsweise die grossen und die kleinen Öffnungen jeweils im wesentlichen an die Schwenkebene des Betätigungsgliedes (7) angrenzen.

16. Mischventil nach einem der vorhergehenden Ansprüche, dadurch gekennzeichnet, dass die Einlässe (9, 9', 9'', 10, 10', 10'') bzw. die gedachten Mittelpunkte der Einlassbereiche des Kugelkükens (2) auf Kugelküken-Radiallinien liegen, die untereinander einen Winkel von 60 bis 100, vorzugsweise 80°, einschliessen.

17. Mischventil nach einem der vohergehenden Ansprüche, dadurch gekennzeichnet, dass die Radiallinie des Auslasses (11) des Kugelkükens (2) mit dem von Betätigungsglied (7) abgewandten Teil der Längsachse (b) des Betätigungsgliedes (7) einen Winkel im Bereich von 40 bis 60, vorzugsweise 50°, einschliesst.

18. Mischventil nach einem der vorhergehenden Ansprüche, dadurch gekennzeichnet, dass Einlässe (10, 10', 10'') des einen Einlassbereiches des Kugelkükens (2) in Ventilschliessstellung innerhalb eines Kreises liegen, dessen Mittelpunkt in Ventilschliessstellung auf der Drehachse (g) liegt, und dessen Radius kleiner ist als der kleinste Abstand zum nächstliegenden Mündungsrand in der Ventilsitzfläche (3).

19. Mischventil nach Anspruch 18, dadurch gekennzeichnet, dass die Einlässe (9, 9', 9'') des anderen Einlassbereiches des Kugelkükens (2) in der Ventilschliessstellung ausserhalb eines Kreises liegen, der in der Ventilschliessstellung um die Drehachse (g) verläuft, in einer senkrecht zur Drehachse verlaufenden Ebene liegt und mindestens die zugehörige, vorzugsweise beide Mündungen der Einlasskanäle (4, 5) in der Ventilsitzfläche einschliesst.

20. Mischventil nach einem der vorhergehenden Ansprüche, dadurch gekennzeichnet, dass Führungsstege (36) zwischen den Einlasskanalmündungen und der grossflächig gestalteten Auslasskanalmündung in der Ventilsitzfläche (3) schmäler sind als der wirksame Durchmesser der Einlassöffnungen, insbesondere als der lichte Durchmesser der grossen Einlassöffnungen (9, 10).

21. Mischventil nach einem der vorhergehenden Ansprüche, dadurch gekennzeichnet, dass der Abstand zwischen den Kanten der Kugelkükeneinlässe dem Abstand zwischen den Kanten der in der Ventilsitzfläche mündenden Kanäle entspricht.

**Claims**

1. Mixing valve for liquids, particularly for sanitation purposes, with a spherical plug (2) having communicating inlet and outlet ports (9, 10, 11), a valve housing (1) having a valve seat face (3) adapted to the spherical plug (2) and into which issue inlet ducts (4, 5) for the liquids to be mixed and an outlet duct (6), and a driving member (7) connected to the spherical plug (2), which is pivotable with spherical plug (2) for varying the quantity of outflowing liquid and is movable for varying the mixing ratio of the inflowing liquids, characterized in that the driving member (7) is pivotable about a pivot axis (a) only passing through the spherical plug centre and/or is rotatable about a rotation axis (g) passing through the spherical plug centre at right angles to the pivot axis (a) and for this purpose is guided in a non-twisting manner in a slot, having parallel guides, of a guide plate (18) rotatable with the driving member (7) relative to valve housing (1) and in the plane thereof, whereby said guide plate (18) is arranged parallel to the pivot axis (a) of driving member (7).

2. Mixing valve according to claim 1, characterized in that the rotatability of the guide plate (18) is limited and preferably, in plan view, the said plate (18) has a substantially circular configuration and is mounted in a bearing body (12) having a central recess (15) and which has a stop (21) limiting the rotatability of guide plate (18) and cooperating with two stops (22, 23) on said guide plate.

3. Mixing valve, particularly according to one of the preceding claims, characterized in that the inlet ports (9, 9', 9'', 10, 10', 10'') of the spherical plug (2) and preferably also the openings of the inlet ducts (4, 5) are successively arranged in a plane parallel to the pivot plane of driving member (7), in the rotation centre position of the latter.

4. Mixing valve according to one of the preceding claims, characterized in that the outlet port (11) of spherical plug (2) is arranged in a laterally displaced manner between the inlet ports (9, 9', 9'', 10, 10', 10'') of the spherical plug (2) with respect to the pivot plane of driving member (7).

5. Mixing valve according to one of the preceding claims, characterized in that the inlet ports of the spherical plug (2) are formed by a plurality of inlet openings (9, 9', 9'', 10, 10', 10''), in each case forming inlet areas.

6. Mixing valve according to claim 5, characterized in that the inlet openings are smaller and preferably half as large in the longitudinal direction as in the latitudinal direction.

7. Mixing valve according to one of the preceding claims, characterized in that the openings of the inlet ducts (4, 5) in the valve seat face of valve housing (1) are arranged in mirror-symmetrical manner to a plane running at right angles to the pivot plane of driving member (7) in the rotation centre position of spherical plug (2).

8. Mixing valve according to one of the preceding claims, characterized in that the outlet port (11) of spherical plug (2) in the rotation centre position of the latter is arranged on the side of the plug equator remote from the driving member (7) and is positioned on a longitude, which forms an angle of 75 to 105°, preferably approximately 90° with the pivot plane of driving member (7).

9. Mixing valve according to one of the claims 5 to 8, characterized in that the plane, in which are located the longitudinal axis (b) of driving member (7) and the pivot axis (a), subdivides into unequal portions the connecting lines of corresponding cold and hot water inlet openings of spherical plug (2).

10. Mixing valve according to claim 9, characterized in that the corresponding inlet openings are constructed and arranged in a substantially mirror-symmetrical manner and the plane of symmetry forms an angle of approximately 20° with the plane on which are located the longitudinal axis (b) of driving member (7) and the pivot axis (a).

11. Mixing valve according to one of the preceding claims, for fitting in a position in which the inlet ducts issue substantially from below and, when viewed by the user successively, into the valve seat face, characterized in that the front inlet port (10, 10', 10'') of the spherical plug (2), with respect to the user, is closer to the plane passing through the pivot axis (a) and the longitudinal axis (b) of the driving member (7) than the rear inlet port (9, 9', 9'') of spherical plug (2).

12. Mixing valve according to one of the claims 5 to 10, characterized in that the inlet ports of the spherical plug (2) are constructed as inlet areas (9, 9', 9'', 10, 10', 10'') having at least two openings, which are preferably in each case formed by small openings and at least one large opening, the larger openings (9, 10) being positioned closer to the outlet port (11) than the smaller openings (9', 9'', 10', 10'').

13. Mixing valve according to claim 11, characterized in that there are at least two smaller, elongated openings (9', 9'', 10', 10''), which are preferably juxtaposed in parallel.

14. Mixing valve according to one of the preceding claims, characterized in that the inlet ports (9, 9', 9'', 10, 10', 10'') of the spherical plug (2) are arranged in the vicinity of a circular path (26), whose plane is parallel to the pivot axis and to which is preferably inclined the plane formed by the longitudinal axis of the driving member and the pivot axis and in particular forms with said plane an angle of 65 to 75° and preferably approximately 70°, and that the width of the openings on the spherical surface at right angles to the circular path preferably substantially corresponds to the diameter of the openings of the inlet ducts.

15. Mixing valve according to one of the claims 12 to 14, characterized in that the larger openings (9, 10), relative to the pivot plane of the driving member (7), are arranged on the side of outlet port (11), and the smaller openings (9', 9'', 10', 10'') are arranged on the opposite side, the large and small openings preferably being substantially adjacent to the pivot plane of driving member (7).

16. Mixing valve according to one of the preceding claims, characterized in that the inlet ports (9, 9', 9'', 10, 10', 10'') and/or the imaginary centres of the inlet areas of the spherical plug (2) are located on spherical plug radial lines, which form with one another an angle of 60 to 100° and preferably 80°.

17. Mixing valve according to one of the preceding claims, characterized in that the radial line of outlet port (11) of spherical plug (2) forms an angle in the range 40 to 60°, preferably 50° with the part of the longitudinal axis (b) of driving member (7), which is remote from the latter.

18. Mixing valve according to one of the preceding claims, characterized in that inlet ports (10, 10', 10'') of one inlet area of spherical plug (2) are, in the valve closed position, within a circle, whose centre is located on rotation axis (g) in said valve closed position and whose radius is smaller than the smallest distance to the next opening edge in the valve seat face (3).

19. Mixing valve according to claim 18, characterized in that the inlet ports (9, 9', 9'') of the other inlet area of the spherical plug (2), in the valve closed position, are outside a circle passing around rotation axis (g) in said valve closed position, is in a plane at right angles to the rotation direction and surrounds at least the associated and preferably two openings of the inlet ducts (4, 5) in the valve seat face.

20. Mixing valve according to one of the preceding claims, characterized in that guide webs (36) between the inlet duct openings and the large-surface outlet duct opening in the valve seat face (3) are narrower than the effective diameter of the inlet openings and particularly the internal diameter of the large inlet openings (9, 10).

21. Mixing valve according to one of the preceding claims, characterized in that the distance between the edges of the spherical plug inlets corresponds to the distance between the edges of the ducts issuing into the valve seat face.

## Revendications

1. Robinet mélangeur pour liquides, en particulier à des fins sanitaires, comprenant une clé sphérique (2) qui présente des entrées et des sorties (9, 10, 11) en communication mutuelle, un corps de valve (1) comportant pour la clé sphérique (2) une surface (3) formant siège de valve, adaptée à ladite clé et dans laquelle débouchent des canaux (4, 5) d'admission des liquides devant être mélangés et un canal d'évacuation (6), ainsi qu'un organe d'actionnement (7) qui est relié à la clé sphérique (2) et qui peut pivoter avec cette clé sphérique (2) pour modifier la quantité du liquide délivré et être déplacé pour modifier le rapport de mélange des liquides admis, caractérisé par le fait que l'organe d'actionnement (7) peut seulement pivoter autour d'un axe de pivotement (a) passant par le milieu de la clé sphérique et/ou peut seulement tourner autour d'un axe de rotation (g) passant par le milieu de la clé sphérique perpendiculairement à l'axe de pivotement (a) et est, à cet effet, guidé sans pouvoir tourner dans une fenêtre (25) — comportant des guides parallèles — d'un disque de guidage (18) parallèle à l'axe de pivotement (a) de l'organe d'actionnement (7) et pouvant accomplir une rotation dans son plan, conjointement audit organe d'actionnement (7), par rapport au corps de valve (1).

2. Robinet mélangeur selon la revendication 1, caractérisé par le fait que l'aptitude du disque de guidage (18) à tourner est limitée, de préférence le disque de guidage (18) étant de configuration sensiblement circulaire, observé en plan, et monté dans un élément de montage (12) présentant un évidement central (15) et doté d'une butée (21) coopérant avec deux butées (22, 23) du disque de guidage (18) et limitant l'aptitude de ce disque de guidage (18) à tourner.

3. Robinet mélangeur, en particulier selon l'une des revendications précédentes, caractérisé par le fait que les entrées (9, 9', 9'', 10, 10', 10'') de la clé sphérique (2) et, de préférence, également les embouchures des canaux d'admission (4, 5) se trouvent les unes derrière les autres, dans la position centrale de rotation de l'organe d'actionnement (7), dans un plan parallèle au plan de pivotement de cet organe d'actionnement (7).

4. Robinet mélangeur selon l'une des revendications précédentes, caractérisé par le fait que la sortie (11) de la clé sphérique (2) est située, par rapport au plan de pivotement de l'organe d'actionnement (7), entre les entrées (9, 9', 9'', 10, 10', 10'') de la clé sphérique (2), mais est toutefois décalée latéralement.

5. Robinet mélangeur selon l'une des revendications précédentes, caractérisé par le fait que les entrées de la clé sphérique (2) sont formées par plusieurs orifices d'admission (9, 9', 9'', 10, 10', 10'') constituant des zones d'admission respectives.

6. Robinet mélangeur selon la revendication 5, caractérisé par le fait que l'étendue des orifices d'admission en longitude est plus petite que leur étendue en latitude, de préférence approximativement de la moitié de cette dernière.

7. Robinet mélangeur selon l'une des revendications précédentes, caractérisé par le fait que les embouchures des canaux d'admission (4, 5) sont disposées, dans la surface du corps (1) formant siège de valve, spéculairement par rapport à un plan s'étendant perpendiculairement au plan de pivotement de l'organe d'actionnement (7) dans la position centrale de rotation de la clé sphérique (2).

8. Robinet mélangeur selon l'une des revendications précédentes, caractérisé par le fait que la sortie (11) de la clé sphérique (2) se trouve, dans la position centrale de rotation de cette clé sphérique (2), du côté de l'équateur de ladite clé sphérique opposé à l'organe d'actionnement (7) et occupe en longitude une position qui forme, avec le plan de pivotement de l'organe d'actionnement (7), un angle de 75 à 105, de préférence d'environ 90°.

9. Robinet mélangeur selon l'une des revendications 5 à 8, caractérisé par le fait que le plan dans lequel se trouvent l'axe longitudinal (b) de l'organe d'actionnement (7) et l'axe de pivotement (a) subdivise en des tronçons inégaux les lignes de jonction d'orifices d'admission d'eau froide et d'eau chaude, se correspondant mutuellement, de la clé sphérique (2).

10. Robinet mélangeur selon la revendication 9, caractérisé par le fait que les orifices d'admission se correspondant mutuellement sont sensiblement de réalisation et de disposition respectives spéculaires, et le plan de partage spéculaire forme un angle d'environ 20° avec le plan sur lequel sont situés l'axe longitudinal (b) de l'organe d'actionnement (7) et l'axe de pivotement (a).

11. Robinet mélangeur selon l'une des revendications précédentes, devant être monté dans une position dans laquelle les canaux d'admission, observés sensiblement par-dessous et depuis l'utilisateur, débouchent les uns derrière les autres dans la surface formant siège de valve, caractérisé par le fait que l'entrée (10, 10', 10'') de la clé sphérique (2) située à l'avant par rapport à l'utilisateur est plus rapprochée que l'entrée (9, 9', 9'') de la clé sphérique (2) située à l'arrière du plan passant par l'axe de pivotement (a) et l'axe longitudinal (b) de l'organe d'actionnement (7).

12. Robinet mélangeur selon l'une des revendications 5 à 10, caractérisé par le fait que les entrées de la clé sphérique (2) sont réalisées sous la forme de zones d'admission (9, 9', 9'', 10, 10', 10'') qui présentent au moins deux orifices et par le fait qu'elles sont formées respectivement de préférence par de petits et au moins un grand orifices, les orifices les plus grands (9, 10) étant plus rapprochés de la sortie (11) que les orifices les plus petits (9', 9'', 10', 10'').

13. Robinet mélangeur selon la revendication 11, caractérisé par le fait que sont prévus au moins deux orifices plus petits (9', 9'', 10', 10'') de forme oblongue qui sont de préférence juxtaposés parallèlement l'un à l'autre.

14. Robinet mélangeur selon l'une des revendications précédentes, caractérisé par le fait que les entrées (9, 9', 9'', 10, 10', 10'') de la clé sphérique (2) sont situées au voisinage d'une piste circulaire (26) dont le plan est parallèle à l'axe de pivotement et est de préférence incliné par rapport au plan formé par l'axe longitudinal de l'organe d'actionnement et par l'axe de pivotement, en inscrivant en particulier avec ce plan un angle de 65 à 75°, de préférence d'environ 70°, et par le fait que la largeur des orifices sur la surface de la sphère, perpendiculairement à la piste circulaire, correspond de préférence sensiblement au diamètre des embouchures des canaux d'admission.

15. Robinet mélangeur selon l'une des revendications 12 à 14, caractérisé par le fait que, par rapport au plan de pivotement de l'organe d'actionnement (7), les orifices les plus grands (9, 10) se trouvent du côté de la sortie (11) et les orifices les plus petits (9', 9'', 10', 10'') sont situés du côté opposé, les grands et les petits orifices étant respectivement, de préférence, sensiblement contigus au plan de pivotement de l'organe d'actionnement (7).

16. Robinet mélangeur selon l'une des revendications précédentes, caractérisé par le fait que les entrées (9, 9', 9'', 10, 10', 10'') ou les centres imaginaires des zones d'admission de la clé sphérique (2) se trouvent sur des lignes radiales de la clé sphérique qui décrivent entre elles un angle de 60 à 100°, de préférence de 80°.

17. Robinet mélangeur selon l'une des revendications précédentes, caractérisé par le fait que la ligne radiale de la sortie (11) de la clé sphérique (2) décrit, avec la partie de l'axe longitudinal (b) de l'organe d'actionnement (7) éloignée de cet organe d'actionnement (7), un angle compris dans une plage de 40 à 60°, mesurant de préférence 50°.

18. Robinet mélangeur selon l'une des revendications précédentes, caractérisé par le fait que des entrées (10, 10', 10'') de l'une des zones d'admission de la clé sphérique (2) sont situées, dans la position fermée de la valve, en deçà d'une circonférence dont le centre se trouve sur l'axe de rotation (g) dans la position fermée de la valve, et dont le rayon est plus petit que la distance la plus petite vis-à-vis de l'arête d'embouchure la plus proche dans la surface (3) formant siège de valve.

19. Robinet mélangeur selon la revendication 18, caractérisé par le fait que les entrées (9, 9', 9'') de l'autre zone d'admission de la clé sphérique (2) sont situées, dans la position fermée de la valve, au-delà d'une circonférence qui s'étend autour de l'axe de rotation (g) dans la position fermée de la valve, qui se trouve dans un plan perpendiculaire à l'axe de rotation et qui inclut au moins l'embouchure associée, de préférence les deux embouchures des canaux d'admission (4, 5) dans la surface formant siège de valve.

20. Robinet mélangeur selon l'une des revendications précédentes, caractérisé par le fait que des filets de guidage (36) entre les embouchures des canaux d'admission et l'embouchure de grande superficie du canal d'évacuation dans la surface (3) formant siège de valve sont plus étroits que le diamètre efficace des orifices d'admission, en particulier que le diamètre interne des grands orifices d'admission (9, 10).

21. Robinet mélangeur selon l'une des revendications précédentes, caractérisé par le fait que la distance entre les arêtes des entrées de la clé sphérique correspond à la distance entre les arêtes des canaux débouchant dans la surface formant siège de valve.

## FIG.1

FIG. 2

FIG. 3

FIG. 4

FIG. 5

a)

b)

FIG.6